# EUROPÄISCHE PATENTSCHRIFT

(11) **EP 1 783 448 B1**
(45) Veröffentlichungstag und Bekanntmachung des Hinweises auf die Patenterteilung: **08.04.2009**
(21) Anmeldenummer: 06003079.8
(22) Anmeldetag: 15.02.2006
(51) Int. Cl.: F27B 7/20, C04B 7/43

(54) **Anlage und Verfahren zur Herstellung von Zementklinker**
Plant and process for manufacturing cement clinker
Installation et procédé de préparation de clinker de ciment

(30) Priorität: 04.11.2005 DE 102005052753
(43) Veröffentlichungstag der Anmeldung: 09.05.2007
(73) Patentinhaber: Polysius AG, 59269 Beckum (DE)
(72) Erfinder: Altfeld, Jochen, 48167 Münster (DE); Osburg, Ralf, Dipl.-Ing., 59269 Beckum (DE); Klegraf, Tobias, 59602 Rüthen (DE); Beyer, Christoph, Dr.-Ing., 48157 Münster (DE); Mohr, Markus, Dr.-Ing., 48249 Dülmen (DE); Lampe, Karl, Dr.-Ing., 59320 Ennigerloh (DE); Frie, Sebastian, 48145 Münster (DE)
(74) Vertreter: Tetzner, Michael

(56) Entgegenhaltungen:
- DE-A1- 2 754 851
- DE-A1-9102004 009 68
- JP-A- 1 260 205

## Beschreibung

Die Erfindung betrifft eine Anlage und ein Verfahren zur Herstellung von Zementklinker aus Zementrohmehl, wobei das Zementrohmehl in einer Vorwärmzone vorgewärmt, in einer Calcinierzone vorcalciniert, in einer Sinterbrennzone fertiggebrannt und in einer Kühlzone gekühlt wird, und wobei ferner feste Brennstoffe in einem zusätzlichen Verbrennungsbereich verbrannt werden.

Da die Zementklinkerherstellung einen enormen Energiebedarf hat, ist man bestrebt, technische Lösungen zum vermehrten Einsatz fester Brennstoffe, insbesondere von festen Sekundärbrennstoffen, zu finden, die im Vergleich zu Primärbrennstoffen kostengünstiger sind.

Man hat bereits vorgeschlagen, separate Brennkammern in der Calcinierzone vorzusehen. Dabei wird der Brennstoff und vom Kühler kommende Tertiärluft in die separate Brennkammer eingebracht. Außerdem wird meist eine Teilmenge des Rohmehls zugegeben. Aufgrund der hohen Luftgeschwindigkeiten ist jedoch die Verweilzeit in derartigen Brennkammern relativ kurz, so dass diese für problematische und/oder feste Brennstoffe meist weniger geeignet sind.

Bei einer anderen Ausgestaltung wird die zusätzliche Brennkammer als Drehrohrofen betrieben. Hierbei kann die Verweilzeit des Brennstoffes deutlich erhöht werden, jedoch ist der technische Aufwand komplex und aufwändig.

In der US 5,954,499 wird vorgeschlagen, einen zusätzlichen Verbrennungsbereich in der untersten Zone des Calcinators vorzusehen. Der Brennstoff wird dabei von oben aufgegeben, während das sauerstoffhaltige Gas etwa horizontal in diese Zone eingeführt wird. Ein derartiges Konzept ist aber nur bei Calcinatoren möglich, die nicht von den Abgasen der Sinterbrennzone durchströmt werden.

Aus der DE 10 2004 009 689 A1 ist ferner ein thermischer Zersetzungsreaktor zur Erzeugung eines Brenngases aus festen Brennstoffen bekannt, der eine im Zersetzungsreaktor angeordnete Fördereinrichtung aufweist, die den Brennstoff von der Eintragsöffnung bis zur Austragsöffnung translatorisch bewegt. Die Fördereinrichtung wird beispielsweise durch bewegte Plattensegmente, einen Kratzkettenförderer oder einen sogenannten "Walking Floor" gebildet. Die Verweilzeit des Brennstoffes in der Zersetzungskammer lässt sich durch die Fördereinrichtung gezielt einstellen. Die hohen Temperaturen im Zersetzungsreaktor erfordern jedoch eine hitzebeständige Ausbildung der Fördereinrichtung.

In der DE 27 02 048 ist der zusätzliche Verbrennungsbereich als Fließbettverbrennungseinrichtung, als wandernder Rostvorerhitzer und als Gassuspensionsvorerhitzer ausgeführt. Der wandernde Rostvorerhitzer und die Fließbettverbrennungseinrichtung weisen eine innerhalb des Feuerungsbereichs vorgesehene Fördereinrichtung auf. Im Fall eines Gassuspensionsvorerhitzers ist kein Brennstoffbett vorgesehen.

In der DE 34 11 144 wird der zusätzliche Verbrennungsbereich durch einen Drehrohrofen 5 gebildet. Die Bewegung des Brennstoffbettes erfolgt somit durch den Kontakt mit der rotierenden Innenwandung.

In der AT 368 478 werden für den zusätzlichen Verbrennungsbereich eine Wirbelbett- bzw. Fließbett-Verbrennungsanlage oder eine Rost-Müllverbrennungsanlage genannt. Bei einer Wirbelbett- bzw. Fließbett-Verbrennungsanlage wird das Brennstoffbett durch die Luftzufuhr im Inneren des Feuerungsbereichs bewegt und bei einer Rostfeuerung befindet sich das Brennstoffbett auf einem Wanderrost, einem Vorschub- oder Rückschubrost oder einem Walzenrost.

Der Erfindung liegt nun die Aufgabe zugrunde, ein neues Konzept zur Verbrennung von festen Brennstoffen anzugeben, welches sich kostengünstig realisieren lässt und einen geringen Wartungsaufwand erfordert.

Erfindungsgemäß wird diese Aufgabe durch die Merkmale der Ansprüche 1 und 14 gelöst.

Die erfindungsgemäße Anlage zur Herstellung von Zementklinker aus Zementrohmehl besteht im Wesentlichen aus einer Vorwärmzone zum Vorwärmen des Zementrohmehls, einer Calcinierzone zum Vorcalcinieren des vorgewärmten Zementrohmehls, einer Sinterbrennzone zum Fertigbrennen des vorcalcinierten Zementrohmehls zu Zementklinker sowie aus einer Kühlzone zum Kühlen des heißen Zementklinkers. Weiterhin ist ein zusätzlicher, als Unterschubfeuerung ausgebildeter Verbrennungsbereich zur Erzeugung von Wärme für die Herstellung des Zementklinkers vorgesehen, der eine Eintragsöffnung zur Aufgabe fester Brennstoffe und eine Austragsöffnung zum Ableiten der entstehenden Verbrennungsprodukte, einen Feuerungsbereich sowie wenigstens eine Fördereinrichtung zum Transport des Brennstoffs aufweist, wobei der Feuerungsbereich derart ausgebildet ist, dass der in den Feuerungsbereich eingebrachte Brennstoff ein Brennstoffbett bilden kann und Mittel zum Zuführen von sauerstoffhaltigem Gas oberhalb des Brennstoffbettes derart angeordnet sind, dass das sauerstoffhaltige Gas das Brennstoffbett überströmt. Die Fördereinrichtung ist außerhalb des Feuerungsbereichs vorgesehen und derart ausgebildet, dass sie den Brennstoff in den Feuerungsbereich einbringt und dabei das Brennstoffbett in Richtung der Austragsöffnung bewegt.

Beim erfindungsgemäßen Verfahren zur Herstellung von Zementklinker aus Zementrohmehl wird das Zementrohmehl in einer Vorwärmzone vorgewärmt, in einer Caclcinierzone vorcalciniert, in einer Sinterbrennzone fertiggebrannt und in einer Kühlzone gekühlt. Ferner werden in einem zusätzlichen Verbrennungsbereich Brennstoffe verbrannt, wobei in dem zusätzlichen Verbrennungsbereich ein Feuerungsbereich zur Anwendung kommt, wobei der feste Brennstoff in den Feuerungsbereich eingebracht wird und dort ein Brennstoffbett bildet, welches von einem zugeführten sauerstoffhaltigen Gas überströmt wird und wobei die entstehenden Verbrennungsprodukte über eine Austragsöffnung abgeleitet und bei der Herstellung von Zementklinker benutzt werden. Der Brennstoff wird durch eine außerhalb des Feuerungsbereichs angeordnete Fördereinrichtung derart zugeführt, dass er das vorhandene Brennstoffbett in Richtung Austragsöffnung bewegt.

Weitere Vorteile und Ausgestaltungen der Erfindung sind Gegenstand der Unteransprüche.

Gemäß einer weiteren Ausgestaltung weist der Feuerungsbereich einen um wenigstens 10° gegenüber der Horizontalen geneigten, statischen Boden auf, auf dem das Brennstoffbett ausgebildet ist.

Weiterhin kann der Feuerungsbereich beispielsweise durch einen treppenförmig oder muldenförmig ausgebildeten statischen Boden gebildet werden. Außerdem kann sich an den Feuerungsbereich ein Ausbrandbereich anschließen.

Der zusätzliche Verbrennungsbereich wird vorzugsweise als separate Verbrennungskammer ausgebildet, der außerdem wenigstens ein weiterer Verbrennungsbereich vor- oder nachgeschaltet sein kann.

Weitere Vorteile und Ausgestaltungen der Erfindung werden im Folgenden anhand der Beschreibung einiger Ausführungsbeispiele und der Zeichnung näher erläutert.

### In der Zeichnung zeigen

- Fig. 1: eine schematische Darstellung des zusätzlichen Verbrennungsbereichs in Gestalt einer Unterschubfeuerung gemäß einem ersten Ausführungsbeispiel,
- Fig. 2: eine schematische Darstellung des zusätzlichen Verbrennungsbereichs in Gestalt einer Unterschubfeuerung gemäß einem zweiten Ausführungsbeispiel und
- Fig.3-11: schematische Darstellungen der erfindungsgemäßen Anlage gemäß verschiedenen Ausführungsbeispielen.

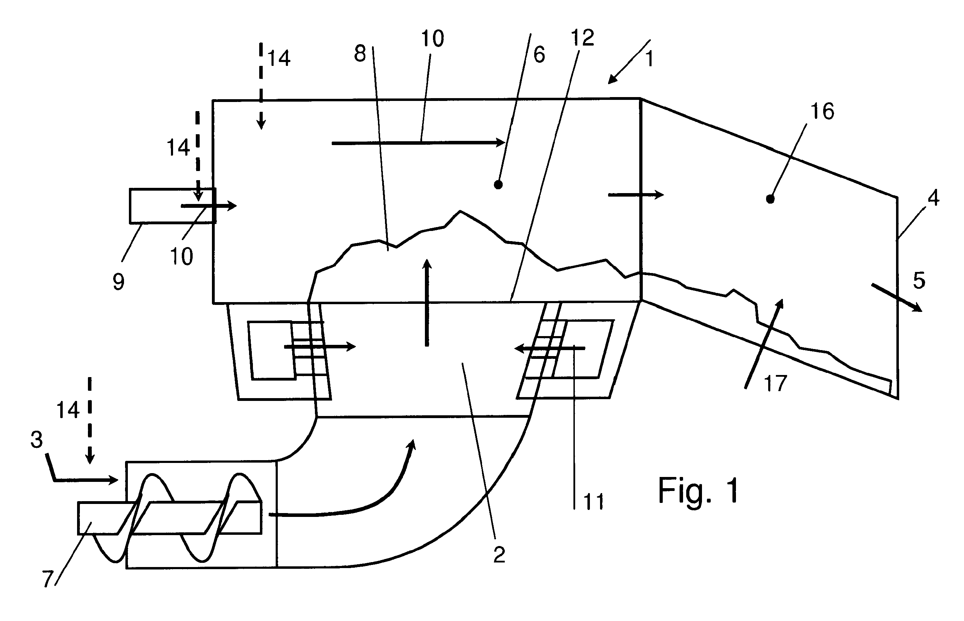

Der in Fig. 1 dargestellte zusätzliche Verbrennungsbereich 1 ist als Unterschubfeuerung ausgebildet. Die Unterschubfeuerung hat eine Eintragsöffnung 2 zur Aufgabe fester Brennstoffe 3, eine Austragsöffnung 4 zum Ableiten der entstehenden Verbrennungsprodukte 5, einen Feuerungsbereich 6 sowie wenigstens eine Fördereinrichtung 7 zum Transport des Brennstoffs 3.

Der Feuerungsbereich 6 ist derart ausgebildet, dass der von unten in den Feuerungsbereich eingebrachte Brennstoff ein Brennstoffbett 8 bildet und oberhalb des Brennstoffbettes Mittel 9 zum Zuführen von sauerstoffhaltigem Gas 10 derart angeordnet sind, dass das sauerstoffhaltige Gas das Brennstoffbett überströmt. Die Fördereinrichtung 7 ist außerhalb des Feuerungsbereich 6 vorgesehen und derart ausgebildet, dass sie den Brennstoff 3 in den Feuerungsbereich einbringt und dabei das Brennstoffbett 8 in Richtung der Austragsöffnung 4 bewegt.

Weiterhin kann der Feuerungsbereich 6 Mittel 11 zum Zuführen eines primärlufthaltigen Gasstromes aufweisen. Dieser primärlufthaltige Gasstrom kann beispielsweise über den Boden 12 in das Brennstoffbett eingeführt oder aber auch von oben auf das Brennstoffbett aufgebracht werden. Weiterhin können im Feuerungsbereich Mittel zur zusätzlichen Aufgabe von Brennstoff vorgesehen werden. Es kann außerdem vorteilhaft sein, über Mittel 14 Rohmehl, teilcalciniertes Rohmehl oder ein anderes inertisierendes Material wahlweise oder in Kombination dem Feuerungsbereich 6, dem sauerstoffhaltigen Gas 10, dem primärhaltigen Gas oder dem festen Brennstoff zuzuführen.

Für den Fall einer Störung oder eines Stillstands kann der zusätzliche Verbrennungsbereich 1 über die Mittel 14 mit Rohmehl, teilcalciniertem Rohmehl oder einem anderen inertisierendem Material befüllt werden, um so eine thermische Beanspruchung der Fördereinrichtung 7 und eine Ansatzbildung zu vermeiden.

Darüber hinaus bietet es sich an, die Schüttguteigenschaften des festen Brennstoffs 3 durch Zugabe eines Schüttgut-Konditionierungsmittels, wie beispielsweise Rohmehl oder Sand positiv zu beeinflussen. Ein weiterer Nutzen eines zudosierten inerten Schüttgutes ist in der Kontrolle des Reaktionsintensitäts und damit der Temperatur im Feuerungsbereich 6 zu sehen. Die möglichen Zugabstellen für das inertes Schüttgut sind in der Zeichnung durch gestrichelte, mit 14 gekennzeichnete Pfeile dargestellt. Es bietet sich hierbei insbesondere eine Stelle oberhalb des Feuerungsbereichs 6, eine gemeinsame Einführung mit dem sauerstoffhaltigen Gas 10 oder eine gemeinsame Einführung mit dem festen Brennstoff 3 an.

Bei den entstehenden Verbrennungsprodukten handelt es sich insbesondere um Abgase und gegebenenfalls Verbrennungsrückstände.

Um die Bewegung des Brennstoffbettes zur Austragsöffnung 4 zu unterstützen, kann der statische Boden 12 des Feuerungsbereichs 6 um eine Winkel α von wenigstens 10° gegenüber der Horizontalen geneigt werden.

Im dargestellten Ausführungsbeispiel wird der Brennstoff 3 über eine Förderschnecke von unten in den Feuerungsbereich eingebracht und bildet dort das Brennstoffbett 8, welches von dem sauerstoffhaltigen Gas 10 überströmt wird. Die Fördereinrichtung 7 kann sowohl mechanisch als auch hydraulisch oder pneumatisch ausgebildet werden. Der Brennstoff 3 wird zumindest von unten in den Feuerungsbereich 6 eingeschoben, so dass der zuerst eingeschobene Brennstoff auch zuerst verbrennt und nicht wie im Stand der Technik gemäß US 5,954,499 durch nachfolgenden Brennstoff überdeckt wird.

Über die Austragsöffnung 4 werden die entstehenden Verbrennungsprodukte 5 abgeleitet.

Im dargestellten Ausführungsbeispiel schließt sich außerdem an dem Feuerungsbereich 6 ein Ausbrandbereich 16 an, über dessen Boden ein Gas 17 zugeführt. Etwaige Brennstoffrückstände werden mit entstehenden heißen Abgasen mitgerissen oder können in nicht näher dargestellter Art und Weise nach unten ausgeschleust werden. Der Ausbrandbereich 16 gewährleistet, dass der aufgegebene Brennstoff weitestgehend ausbrennen bzw. soweit ausbrennen kann, dass die endgültige thermische Zersetzung im Flugstrom zu realisieren ist. Das von unten zugeführte Gas 17 unterstützt dabei den Eintrag des Materials in den Flugstrom, um so die gänzliche thermische Verwertung des Materials zu gewährleisten.

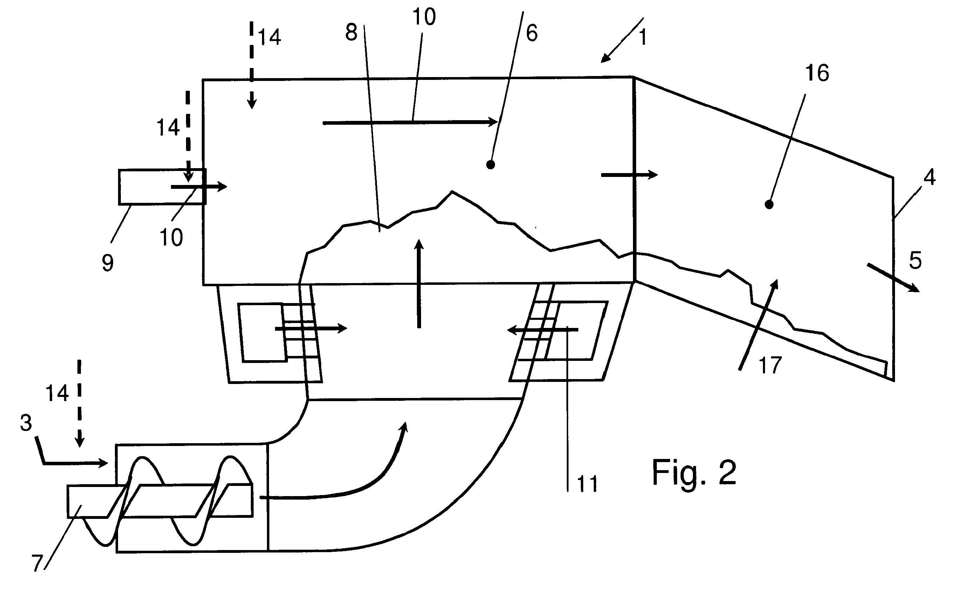

Während die Unterschubfeuerung gemäß Fig. 1 nach Art einer Retortenfeuerung ausgebildet ist, zeigt Fig. 2 ein Ausführungsbeispiel, bei welchem die Unterschubfeuerung eine Feuermulde aufweist.

Bei den in den Fig. 1 und 2 dargestellten Ausführungsbeispielen ist die Fördereinrichtung 7 derart ausgebildet, dass sie den Brennstoff 3 in den Feuerungsbereich 6 einbringt und dabei das Brennstoffbett in Richtung der Austragsöffnung 4 bewegt. Es ist dabei ein kontinuierlicher und/oder diskontinuierlicher Transport des Brennstoffs in den Feuerungsbereich denkbar. Vorzugsweise ist die Fördereinrichtung 7 so ausgebildet, dass sie das Brennstoffbett 8 derart bewegt, dass ein regelmäßiges Aufbrechen der Oberfläche des Brennstoffbettes bewirkt wird, so dass immer wieder neuer Brennstoff mit dem sauerstoffhaltigen Gas 10 in Kontakt kommt.

Im Rahmen der Erfindung wäre es auch denkbar, dass die Geschwindigkeit des zugeführten sauerstoffhaltigen Gases 10 so hoch gewählt wird, dass der Brennstofftransport innerhalb des Feuerungsbereiches 6 und/oder die Brennstoffzuführung pneumatisch geschieht.

Der zusätzliche Verbrennungsbereich wird zweckmäßigerweise als separate Verbrennungskammer ausgebildet. Außerdem kann dem zusätzlichen Verbrennungsbereich wenigstens ein weiterer Verbrennungsbereich vor- oder nachgeschaltet sein, wobei dieser weitere Verbrennungsbereich auch anders ausgestaltet sein kann.

Im Folgenden werden nun verschiedene Ausführungsbeispiele kurz erläutert, die verschiedene Möglichkeiten aufzeigen, wie man den zusätzlichen Verbrennungsbereich in einer Anlage zur Herstellung von Zementklinker aus Zementrohmehl integrieren kann. Im Rahmen der Erfindung sind selbstverständlich auch andere Ausführungsformen denkbar, die nicht im Einzelnen dargestellt sind.

In allen nachfolgenden Ausführungsbeispielen kann der zusätzliche Verbrennungsbereich insbesondere nach einem der in Fig. 1 und 2 beschriebenen Ausführungsbeispiele ausgestaltet sein.

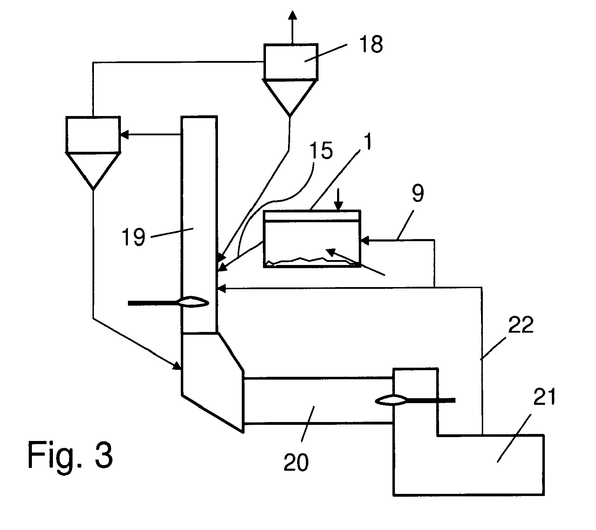

Die in Fig. 3 dargestellte Anlage besteht im Wesentlichen aus einer schematisch angedeuteten Vorwärmzone 18 zum Vorwärmen des Zementrohmehls, einer Calcinierzone 19 zum Vorcalcinieren des Rohmaterials, einer Sinterbrennzone 20 zum Fertigbrennen des vorcalcinierten Zementrohmehls zu Zementklinker sowie einer Kühlzone 21 zum Kühlen des heißen Zementklinkers.

Der zusätzliche Verbrennungsbereich 1 ist derart angeordnet, dass die Mittel 15 zum Ableiten der Verbrennungsprodukte direkt in der Calcinierzone 19 münden. Die Mittel 9 zum Zuführen von sauerstoffhaltigem Gas zum zusätzlichen Verbrennungsbereich 1 werden durch eine von der Tertiärluftleitung 22 abzweigende Leitung gebildet.

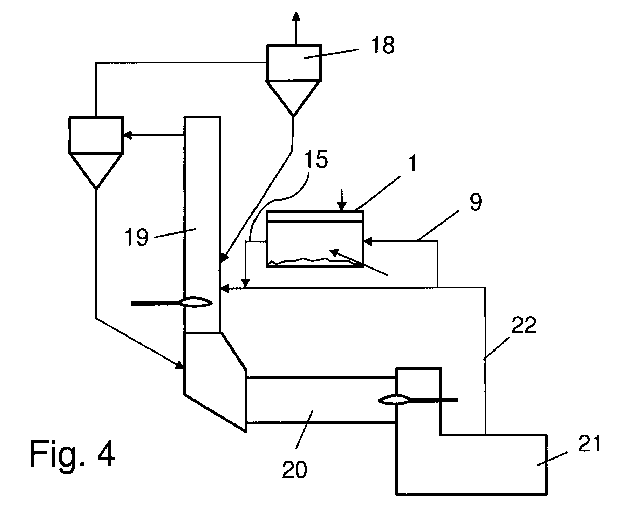

Das in Fig. 4 dargestellte Ausführungsbeispiel unterscheidet sich vom vorherigen Ausführungsbeispiel dadurch, dass die Mittel 15 zum Ableiten der Verbrennungsprodukte nicht direkt in der Calcinierzone 19 sondern in der zur Calcinierzone 19 führenden Tertiärluftleitung 22 münden.

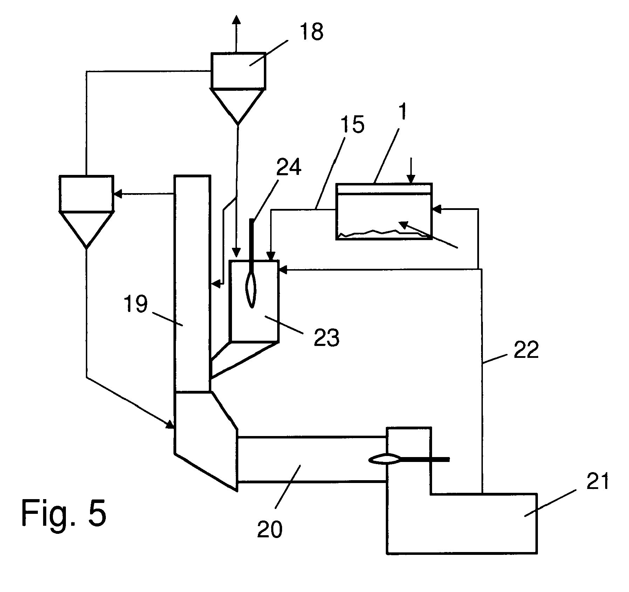

Bei der in Fig. 5 dargestellten Anlage weist die Calcinierzone 19 zusätzlich noch eine separate Brennkammer 23 auf, in die Tertiärluft über die Tertiärluftleitung 22 sowie Brennstoff 24 zugeführt werden. Im Gegensatz zur Calcinierzone 19 wir die separate Brennkammer 23 nicht von den Abgasen der Sinterbrennzone 20 durchströmt. Ferner kann zumindest ein Teil des vorgewärmten Rohmehls in die separate Brennkammer aufgegeben werden.

Der zusätzliche Verbrennungsbereich ist so angeordnet, dass die Mittel 15 zum Ableiten der Verbrennungsprodukte an den oberen Bereich der separaten Brennkammer 23 angeschlossen sind.

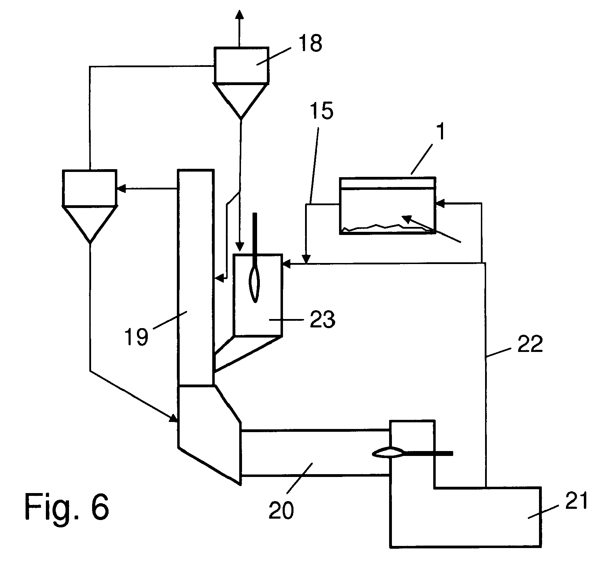

Bei dem in Fig. 6 dargestellten Ausführungsbeispiel münden die Mittel 15 zum Ableiten der Verbrennungsprodukte in der zur separaten Brennkammer 23 führenden Tertiärluftleitung 22.

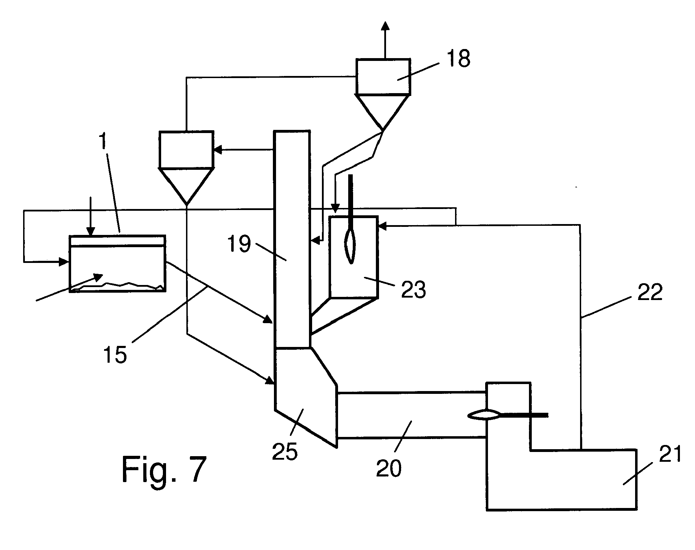

Gemäß der in Fig. 7 gezeigten Variante ist auch denkbar, dass die Mittel 15 zum Ableiten der Verbrennungsprodukte nicht in der separaten Brennkammer 23 sondern in der eigentlichen Calcinierzone 19 münden.

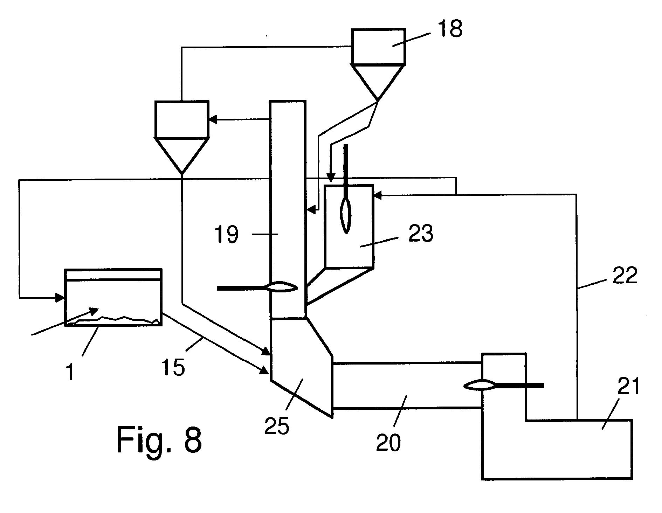

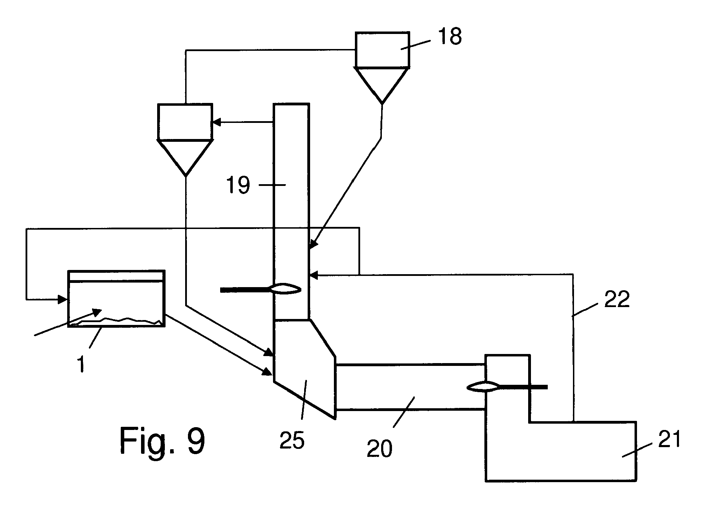

Die Ausführungsbeispiele gemäß den Fig. 8 und 9 zeigen eine Anordnung des zusätzlichen Verbrennungsbereichs, bei dem die Mittel 15 zum Ableiten der Verbrennungsprodukte im Ofeneinlauf 25 des Sinterbrennzone 20 münden, wobei die Variante gemäß Fig. 8 eine Calcinierzone 19 mit separater Brennkammer 23 und in Fig. 9 eine Calcinierzone ohne separate Brennkammer dargestellt ist.

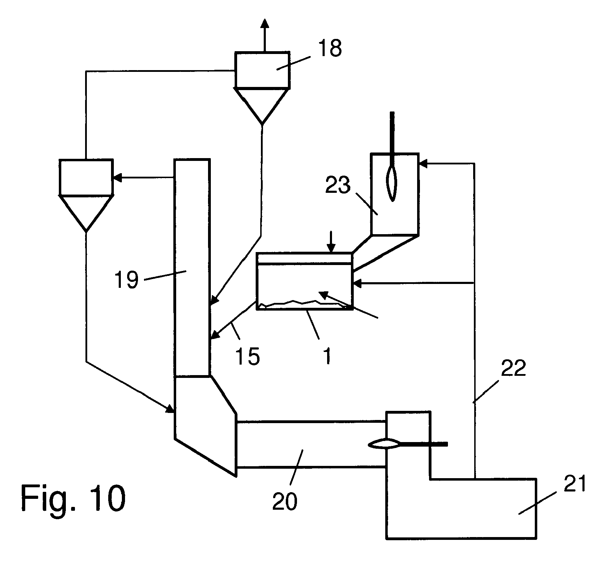

Während in den Ausführungsbeispielen gemäß Fig. 5, 6, 7, und 8 der zusätzliche Verbrennungsbereich der separaten Brennkammer 23 vorgeschaltet worden ist, zeigt Fig. 10 ein Ausführungsbeispiel, bei welchem die separate Brennkammer 23 dem zusätzlichen Verbrennungsbereich vorgeschaltet ist. Die Mittel 15 zum Ableiten der Verbrennungsprodukte münden dann in der eigentlichen Calcinierzone 19.

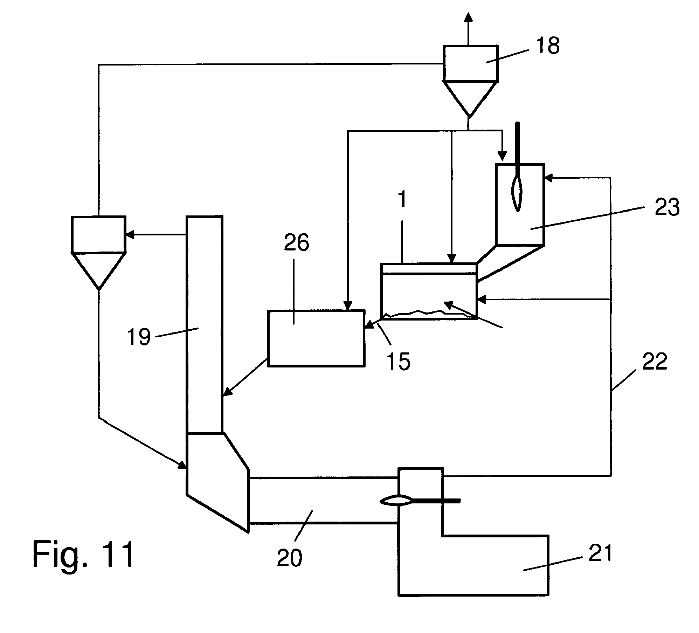

Im Ausführungsbeispiel gemäß Fig. 11 ist neben dem zusätzlichen Verbrennungsbereich 1 und der separaten Brennkammer 23 ein weiterer Verbrennungsbereich 26 vorgesehen, wobei verfahrenstechnisch zunächst die separate Brennkammer 23, dann der zusätzliche Verbrennungsbereich 1 und schließlich der weitere Verbrennungsbereich 26 nacheinander angeordnet sind, wobei jeweils die Verbrennungsrückstände in die nächstfolgende Stufe geleitet werden. Die Verbrennungsprodukte der weiteren Brennkammer 26 werden dann der Calcinierzone 19 zugeführt. Selbstverständlich wäre es auch denkbar, wenn diese drei Verbrennungsbereiche in einer anderen Reihenfolge angeordnet werden. Weiterhin können auch noch weitere Verbrennungsbereiche vorgesehen werden.

Im dargestellten Ausführungsbeispiel wird das vorgewärmte Rohmehl teilweise der separaten Brennkammer 23, dem zusätzlichen Verbrennungsbereich 1 und dem weiteren Verbrennungsbereich 26 zugeführt. Eine weitere Teilmenge könnte auch der Calcinierzone 19 zugeleitet werden.

Der weitere Verbrennungsbereich 26 kann beispielsweise nach Art des oben beschriebenen zusätzlichen Verbrennungsbereichs 1 oder auf andere Art und Weise ausgebildet sein.

In Rahmen der Erfindung sind selbstverständlich auch andere Konstellationen denkbar. Eine weitere interessante Möglichkeit stellt vor allem die Parallelschaltung mehrerer zusätzlicher Verbrennungsbereiche dar.

Der oben beschriebene zusätzliche Verbrennungsbereich 1 ermöglicht den Einsatz von festen, insbesondere stückigen Brennstoffen bei der Zementherstellung. Da die Verbrennungsbedingungen und insbesondere die Verweilzeit des Brennstoffs durch die Fördereinrichtung 7 gezielt eingestellt werden kann, besteht auch die Möglichkeit problematische Sekundärbrennstoffe einzusetzen, dadurch hat der Zementwerksbetreiber die Möglichkeit, grobstückige Sekundärbrennstoffe einzusetzen, die erheblich kostengünstiger sind. Weiterhin zeichnet sich der zusätzliche Verbrennungsbereich durch einen geringen Wartungsaufwand aus und ist im Falle eines Stillstands oder Störfalls der Anlage abschaltbar und kostenneutral.

Der zusätzliche Verbrennungsbereich ist technisch nicht komplex und weist wenig bewegliche Teile auf, so dass deren Realisierung ein geringes Investitionsvolumen erfordert und sich eine kurze Amortisationszeit ergibt.

## Patentansprüche

1. Anlage zur Herstellung von Zementklinker aus Zementrohmehl mit
- einer Vorwärmzone zum Vorwärmen des Zementrohmehls,
- einer Calcinierzone zum Vorcalcinieren des vorgewärmten Zementrohmehls,
- einer Sinterbrennzone zum Fertigbrennen des vorcalcinierten Zementrohmehls zu Zementklinker,
- einer Kühlzone zum Kühlen des heißen Zementklinkers
- sowie wenigstens einem zusätzlichen Verbrennungsbereich (1) zur Erzeugung von Wärme für die Herstellung des Zementklinkers, der eine Eintragsöffnung (2) zur Aufgabe fester Brennstoffe (3), eine Austragsöffnung (4) zum Ableiten der entstehenden Verbrennungsprodukte (5), einen Feuerungsbereich (6) sowie wenigstens eine Fördereinrichtung (7) zum Transport des Brennstoffs aufweist, wobei der Feuerungsbereich derart ausgebildet ist, dass der in den Feuerungsbereich eingebrachte Brennstoff ein Brennstoffbett (8) bilden kann und Mittel zum Zuführen von sauerstoffhaltigem Gas oberhalb des sich ausbildenden Brennstoffbettes derart angeordnet sind, dass das sauerstoffhaltige Gas das Brennstoffbett überströmt,
**dadurch gekennzeichnet, dass** der zusätzliche Verbrennungsbereich (1) als Unterschubfeuerung ausgebildet ist und die Fördereinrichtung außerhalb des Feuerungsbereichs vorgesehen und derart ausgebildet ist, dass sie den Brennstoff (3) in den Feuerungsbereich einbringt und dabei das Brennstoffbett (8) in Richtung der Austragsöffnung (4) bewegt.

2. Anlage nach Anspruch 1, **dadurch gekennzeichnet, dass** der Feuerungsbereich (6) einen um wenigstens 10° gegenüber der Horizontalen geneigten, statischen Boden (12) aufweist, auf dem das Brennstoffbett (8) ausgebildet ist.

3. Anlage nach Anspruch 1, **dadurch gekennzeichnet, dass** der Feuerungsbereich (6) einen treppenförmig ausgebildeten statischen Boden (12) aufweist.

4. Anlage nach Anspruch 1, **dadurch gekennzeichnet, dass** der Feuerungsbereich (6) einen muldenförmig ausgebildeten statischen Boden (12) aufweist.

5. Anlage nach einem oder mehreren der vorhergehenden Ansprüche, **dadurch gekennzeichnet, dass** sich an den Feuerungsbereich (6) ein Ausbrandbereich (16) anschließt.

6. Anlage nach einem oder mehreren der vorhergehenden Ansprüche, **dadurch gekennzeichnet, dass** die Mittel (9) zum Zuführen von sauerstoffhaltigem Gas mit der Kühlzone (21) in Verbindung stehen und es sich bei dem sauerstoffhaltigem Gas (10) um Tertiärluft der Kühlzone (21) handelt.

7. Anlage nach einem oder mehreren der vorhergehenden Ansprüche, **dadurch gekennzeichnet, dass** die Mittel (9) zum Zuführen von sauerstoffhaltigem Gas Mittel (14) zum Zusetzen von Zementrohmehl und/oder teilcalciniertem Zementrohmehl in das sauerstoffhaltige Gas aufweisen.

8. Anlage nach einem oder mehreren der vorhergehenden Ansprüche, **dadurch gekennzeichnet, dass** die Mittel (15) zum Ableiten der entstehenden Verbrennungsprodukte mit der Calcinierzone (19), dem Vorwärmer (18) und/oder der Sinterzone (20) in Verbindung stehen.

9. Anlage nach einem oder mehreren der vorhergehenden Ansprüche, **dadurch gekennzeichnet, dass** der zusätzliche Verbrennungsbereich (1) Mittel (14) zum Zuführen von Zementrohmehl und/oder teilcalciniertem Zementrohmehl aufweist.

10. Anlage nach einem oder mehreren der vorhergehenden Ansprüche, **dadurch gekennzeichnet, dass** im Feuerungsbereich (6) Mittel (11) zum Zuführen eines primärlufthaltigen Gasstroms vorgesehen sind.

11. Anlage nach einem oder mehreren der vorhergehenden Ansprüche, **dadurch gekennzeichnet, dass** im Feuerungsbereich Mittel (13) zur zusätzlichen Aufgabe von Brennstoff vorgesehen sind.

12. Anlage nach einem oder mehreren der vorhergehenden Ansprüche, **dadurch gekennzeichnet, dass** der zusätzliche Verbrennungsbereich (1) als separate Verbrennungskammer ausgebildet ist.

13. Anlage nach einem oder mehreren der vorhergehenden Ansprüche, **dadurch gekennzeichnet, dass** dem zusätzlichen Verbrennungsbereich (1) wenigstens ein weiterer Verbrennungsbereich (26) vor- oder nachgeschaltet ist.

14. Verfahren zur Herstellung von Zementklinker aus Zementrohmehl, wobei das Zementrohmehl in einer Vorwärmzone (18) vorgewärmt, in einer Calcinierzone (19) vorcalciniert, in einer Sinterbrennzone (20) fertig gebrannt und in einer Kühlzone (21) gekühlt wird, und wobei ferner in einem zusätzlichen Verbrennungsbereich (1) feste Brennstoffe (3) verbrannt werden, wobei in dem zusätzlichen Verbrennungsbereich (1) ein Feuerungsbereich (6) zur Anwendung kommt, wobei der feste Brennstoff (3) in den Feuerungsbereich (6) eingebracht wird und dort ein Brennstoffbett (8) bildet, welches von einem zugeführten sauerstoffhaltigen Gas (10) überströmt wird und wobei die entstehenden Verbrennungsprodukte (5) über eine Austragsöffnung (4) abgeleitet und bei der Herstellung von Zementklinker genutzt werden,
**dadurch gekennzeichnet, dass** der Brennstoff über eine außerhalb des Feuerungsbereichs angeordnete Fördereinrichtung (7) von unten derart zugeführt wird, dass er das vorhandene Brennstoffbett (8) in Richtung Austragsöffnung (4) bewegt.

15. Verfahren nach Anspruch 14, **dadurch gekennzeichnet, dass** der feste Brennstoff (3) vor der Einbringung in den zusätzlichen Verbrennungsbereich (1) mit einem Konditionierungsmittel versetzt wird.

16. Verfahren nach Anspruch 14, **dadurch gekennzeichnet, dass** der zusätzliche Verbrennungsbereich (1) und/oder die Fördereinrichtung (7) für den Brennstoff (24) während eines Stillstandes oder im Störfall, mit einem inertisierenden Material beaufschlagt werden.

17. Verfahren nach Anspruch 14, **dadurch gekennzeichnet, dass** die Fördereinrichtung (7) das Brennstoffbett (8) derart bewegt, dass ein regelmäßiges Aufbrechen der Oberfläche des Brennstoffbettes bewirkt wird, so dass neuer Brennstoff mit dem sauerstoffhaltigen Gas (10) in Kontakt kommt.

18. Verfahren nach Anspruch 14, **dadurch gekennzeichnet, dass** die Geschwindigkeit des zugeführten sauerstoffhaltigen Gases so hoch gewählt wird, das der Brennstofftransport und/oder die Brennstoffzuführung pneumatisch geschieht.

19. Verfahren nach einem oder mehreren der vorhergehenden Ansprüche 14 bis 18, **dadurch gekennzeichnet, dass** für den zusätzlichen Verbrennungsbereich (1) eine Unterschubfeuerung zur Anwendung kommt.

## Claims

1. Plant for the production of cement clinker from cement raw meal, having
- a preheating zone for preheating the cement raw meal,
- a calcining zone for precalcining the preheated cement raw meal,
- a sintering combustion zone for completely burning the precalcined cement raw meal to cement clinker,
- a cooling zone for cooling the hot cement clinker,
- and at least one additional combustion region (1) for producing heat for the production of the cement clinker, which additional combustion region (1) has an intake opening (2) for the admission of solid fuels (3), a discharge opening (4) for the removal of the resulting combustion products (5), a firing region (6) and at least one conveyor device (7) for transporting the fuel, the firing region being in such a form that the fuel introduced into the firing region forms a fuel bed (8) and means for supplying oxygen-containing gas are so arranged above the fuel bed that the oxygen-containing gas flows over the fuel bed,
**characterised in that** the additional combustion region (1) is in the form of an underfeed furnace and the conveyor device is provided outside the firing region and is in such a form that it introduces the fuel (3) into the firing region and thereby moves the fuel bed (8) in the direction towards the discharge opening (4).

2. Plant according to claim 1, **characterised in that** the firing region (6) has a stationary base (12) which is inclined relative to the horizontal by at least 10° and on which the fuel bed (8) is formed.

3. Plant according to claim 1, **characterised in that** the firing region (6) has a stationary base (12) in stepped form.

4. Plant according to claim 1, **characterised in that** the firing region (6) has a stationary base (12) in trough form.

5. Plant according to one or more of the preceding claims, **characterised in that** the firing region (6) is followed by a burnout region (16).

6. Plant according to one or more of the preceding claims, **characterised in that** the means (9) for supplying oxygen-containing gas are connected to the cooling zone (21) and the oxygen-containing gas (10) is tertiary air of the cooling zone (21).

7. Plant according to one or more of the preceding claims, **characterised in that** the means (9) for supplying oxygen-containing gas comprise means (14) for adding cement raw meal and/or partially calcined cement raw meal to the oxygen-containing gas.

8. Plant according to one or more of the preceding claims, **characterised in that** the means (15) for removing the resulting combustion products are connected to the calcining zone (19), the preheater (18) and/or the sintering zone (20).

9. Plant according to one or more of the preceding claims, **characterised in that** the additional combustion region (1) comprises means (14) for supplying cement raw meal and/or partially calcined cement raw meal.

10. Plant according to one or more of the preceding claims, **characterised in that** means (11) for supplying a primary-air-containing gas stream are provided in the firing region (6).

11. Plant according to one or more of the preceding claims, **characterised in that** means (13) for additionally feeding in fuel are provided in the firing region.

12. Plant according to one or more of the preceding claims, **characterised in that** the additional combustion region (1) is in the form of a separate combustion chamber.

13. Plant according to one or more of the preceding claims, **characterised in that** at least one further combustion region (26) is arranged upstream or downstream of the additional combustion region (1).

14. Method for the production of cement clinker from cement raw meal, the cement raw meal being preheated in a preheating zone (18), precalcined in a calcining zone (19), completely burned in a sintering combustion zone (20) and cooled in a cooling zone (21), solid fuels (3) additionally being burned in an additional combustion region (1), a firing region (6) being used in the additional combustion region (1), the solid fuel (3) being introduced into the firing region (6) where it forms a fuel bed (8) over which a supplied oxygen-containing gas (10) flows, the resulting combustion products (5) being removed *via* a discharge opening (4) and being used in the production of cement clinker,
**characterised in that** the fuel is supplied from beneath *via* a conveyor device (7) arranged outside the firing region, in such a manner that it moves the fuel bed (8) that is present in the direction towards the discharge opening (4).

15. Method according to claim 14, **characterised in that** a conditioning agent is added to the solid fuel (3) before it is introduced into the additional combustion region (1).

16. Method according to claim 14, **characterised in that** the additional combustion region (1) and/or the conveyor device (7) for the fuel (24) are charged with a deactivating material during a stoppage or in the event of a breakdown.

17. Method according to claim 14, **characterised in that** the conveyor device (7) moves the fuel bed (8) in such a manner that the surface of the fuel bed is regularly broken open so that fresh fuel comes into contact with the oxygen-containing gas (10).

18. Method according to claim 14, **characterised in that** the speed of the supplied oxygen-containing gas is such that the transport of the fuel and/or the supply of fuel takes place pneumatically.

19. Method according to one or more of the preceding claims 14 to 18, **characterised in that** an underfeed furnace is used for the additional combustion region (1).

## Revendications

1. Installation pour la fabrication de clinker de ciment, avec
- une zone de préchauffage pour le préchauffage de la farine de ciment crue,
- une zone de calcination pour la pré-calcination de la farine de ciment crue préchauffée,
- une zone de frittage pour finir la cuisson de la farine de ciment crue pré-calcinée en clinker de ciment,
- une zone de refroidissement pour le refroidissement du clinker de ciment chaud,
- ainsi qu'au moins une section de combustion supplémentaire (1) pour la production de chaleur pour la fabrication du clinker de ciment, qui présente une ouverture d'admission (2) pour le chargement des combustibles solides (3), une ouverture d'évacuation (4) pour la vidange des produits résultant de la combustion (5), une zone de chauffe (6), ainsi qu'au moins un dispositif de transport (7) pour le transport du combustible, la section de chauffe étant conçue de sorte que le combustible, amené dans la section de chauffe, puisse former un lit de combustible (8), et que des moyens pour l'amenée de gaz contenant de l'oxygène se trouvent disposés au-dessus du lit de combustible en formation, de sorte que le gaz contenant de l'oxygène se répande sur le lit de combustible,
**caractérisé en ce que** la section de combustion supplémentaire (1) est réalisée en tant que foyer à propulsion inférieure et que le dispositif de transport est prévu en dehors de la section de chauffe et est réalisé de sorte qu'il amène le combustible (3) dans la section de chauffe et déplace en même temps le lit de combustible (8) dans la direction de l'ouverture d'évacuation (4).

2. Installation selon la revendication 1, **caractérisée en ce que** la section de chauffe (6) présente un fond statique (12) incliné d'au moins 10° par rapport à l'horizontale, sur lequel est formé le lit de combustible (8).

3. Installation selon la revendication 1, **caractérisée en ce que** la section de chauffe (6) présente un fond statique (12) conçu en forme d'escalier.

4. Installation selon la revendication 1, **caractérisée en ce que** la section de chauffe (6) présente un fond statique (12) conçu en forme de cavité.

5. Installation selon l'une ou plusieurs des revendications précédentes, **caractérisée en ce qu'**une section de complétion de la combustion (16) est raccordée à la section de chauffe (6).

6. Installation selon l'une ou plusieurs des revendications précédentes, **caractérisée en ce que** les moyens (9) pour l'amenée de gaz contenant de l'oxygène sont en relation avec la zone de refroidissement (21) et que le gaz contenant de l'oxygène (10) est de l'air tertiaire de la zone de refroidissement (21).

7. Installation selon l'une ou plusieurs des revendications précédentes, **caractérisée en ce que** les moyens (9) pour l'amenée de gaz contenant de l'oxygène présentent des moyens (14) pour mélanger de la farine de ciment crue et / ou de la farine de ciment crue partiellement calcinée dans le gaz contenant de l'oxygène.

8. Installation selon l'une ou plusieurs des revendications précédentes, **caractérisée en ce que** les moyens (9) pour l'évacuation des produits résultant de la combustion sont en relation avec la zone de calcination (19), le préchauffeur (18) et / ou la zone de frittage (20).

9. Installation selon l'une ou plusieurs des revendications précédentes, **caractérisée en ce que** la section de combustion supplémentaire (1) présente des moyens (14) pour l'amenée de farine de ciment crue et / ou de farine de ciment crue partiellement calcinée.

10. Installation selon l'une ou plusieurs des revendications précédentes, **caractérisée en ce que** des moyens (11) sont prévus, dans la section de chauffe (6), pour l'amenée d'un courant de gaz contenant de l'air primaire.

11. Installation selon l'une ou plusieurs des revendications précédentes, **caractérisée en ce que** des moyens (13) sont prévus, dans la section de chauffe (6), pour l'apport supplémentaire de combustible.

12. Installation selon l'une ou plusieurs des revendications précédentes, **caractérisée en ce que** la section de combustion supplémentaire (1) est conçue en tant que chambre de combustion séparée.

13. Installation selon l'une ou plusieurs des revendications précédentes, **caractérisée en ce qu'**au moins une autre section de combustion (26) est connectée en amont ou en aval de la section de combustion supplémentaire (1).

14. Procédé pour la fabrication de clinker de ciment en farine de ciment crue, la farine de ciment crue subissant un préchauffage dans une zone de préchauffage (18), une pré-calcination dans une zone de calcination (19), et une cuisson finale dans une zone de frittage (20) et refroidie dans une zone de refroidissement (21), et des combustibles solides (3) étant brûlés dans une section de combustion supplémentaire (1), une zone de chauffe (6) étant mise en oeuvre dans la section de combustion supplémentaire (1), le combustible solide (3) étant amené dans la zone de chauffe (6), dans laquelle il forme un lit de combustion (8), au-dessus duquel s'écoule un gaz contenant de l'oxygène, et les produits résultant de la combustion (5) étant évacués par une ouverture d'évacuation (4) et utilisés pour la fabrication de clinker de ciment, **caractérisé en ce que** le combustible est amené, d'en bas, par l'intermédiaire d'un dispositif de transport (7), disposé au-dessus, de la section de chauffe, de sorte qu'il déplace, en direction de l'ouverture d'évacuation, (4) le lit de combustible (8) existant.

15. Procédé selon la revendication 14, **caractérisé en ce que** le combustible solide (3) est mélangé avec un agent de conditionnement avant d'être amené dans la section de combustion supplémentaire (1).

16. Procédé selon la revendication 14, **caractérisé en ce que** la section de combustion supplémentaire (1) et / ou le dispositif de transport (7) du combustible (24) sont soumis, pendant un arrêt ou une perturbation, à l'influence d'une matière d'inertisation.

17. Procédé selon la revendication 14, **caractérisé en ce que** le dispositif de transport (7) agite le lit de combustible (8), ce dont résulte une rupture régulière de la surface du lit de combustible, de sorte qu'un nouveau combustible entre en contact avec le gaz contenant de l'oxygène (10).

18. Procédé selon la revendication 14, **caractérisé en ce que** la vitesse d'alimentation en gaz contenant de l'oxygène est sélectionnée si élevée que le transport de combustibles et / ou l'alimentation en combustibles s'effectuent pneumatiquement.

19. Procédé selon l'une ou plusieurs des revendications précédentes, **caractérisé en ce que,** pour la section de combustion supplémentaire (1), un foyer à propulsion inférieure est utilisé.
